# EUROPEAN PATENT APPLICATION

(11) **EP 4 592 942 A1**
(43) Date of publication of application: **30.07.2025**
(21) Application number: 23867978.1
(22) Date of filing: 29.08.2023
(51) Int. Cl.: G06T 7/00, G01N 21/88

(54) **IMAGE PROCESSING DEVICE AND IMAGE PROCESSING METHOD**

(30) Priority: 20.09.2022 JP 2022149203
(71) Applicant: Panasonic Intellectual Property Management Co., Ltd., Kadoma-shi, Osaka 571-0057 (JP)
(72) Inventor: ICHIKAWA, Takuto, Kadoma-shi, Osaka 571-0057 (JP); TOSHIHIRO, Shunsaku, Kadoma-shi, Osaka 571-0057 (JP)
(74) Representative: SSM Sandmair
(86) International application number: PCT/JP2023/031170
(87) International publication number: WO 2024/062854

(57) **Abstract**

Learning efficiency or processing speed of an image processing device is improved. Image processing device (100) includes acquisition part (110), division part (120), determination part (140), and output part (150). Acquisition part (110) acquires an original image showing an inspection target object. Division part (120) generates a plurality of divided images by dividing an original image based on a feature of an inspection target object shown in the original image. Determination part (140) determines, for each of a plurality of divided images, whether or not determination as to whether an inspection target object is good or defective can be made by using rule information, and determines, for a first divided image for which determination as to whether the inspection target object is good or defective can be made by using the rule information among a plurality of the divided images, whether the inspection target object is good or defective by using the rule information. Output part (150) outputs, to learning module (160) capable of machine learning or obtained as a learning result, a second divided image for which determination as to whether the inspection target object is good or defective cannot be made by using the rule information among a plurality of divided images.

## Description

### TECHNICAL FIELD

The present disclosure relates to an image processing device and an image processing method.

### BACKGROUND ART

Conventionally, there is a device that learns or evaluates an inspection target object such as an electronic component by using an image showing the inspection target object (see, for example, PTL 1).

PTL 1 discloses an object evaluation system including a multiple image acquisition device, an image output device, and a learning module. The multiple image acquisition device includes a camera. The multiple image acquisition device acquires a first image in which an object is shot from a first direction by the camera and a second image in which the object is shot from a second direction. The image output device obtains the first image and the second image. Further, the image output device inputs the first image and the second image to the learning module that capable of machine learning or obtained as a learning result. More specifically, the first image is input from a first portion of an input means included in the learning module, and the second image is input from a second portion of the input means.

### Citation List

### Patent Literature

PTL 1: Unexamined Japanese Patent Publication No. 2018-132962

### SUMMARY OF THE INVENTION

When the learning module capable of machine learning is caused to perform machine learning, it is desired to improve learning efficiency in such a manner as, for example, causing the learning module to perform machine learning with a small amount of information. Further, in the learning module obtained as a learning result, that is, a machine-learned learning module, improvement in processing speed is desired.

The present disclosure provides an image processing device and an image processing method capable of improving learning efficiency or improving processing speed.

An image processing device according to one aspect of the present disclosure includes an acquisition part, a division part, a determination part, and an output part. The acquisition part acquires an original image showing an inspection target object. The division part generates a plurality of divided images by dividing the original image based on a feature of the inspection target object shown in the original image. The determination part determines, for each of a plurality of the divided images, whether or not determination as to whether the inspection target object is good or defective can be made by using rule information, and determines, for a first divided image for which determination as to whether the inspection target object is good or defective can be made by using the rule information among a plurality of the divided images, whether the inspection target object is good or defective by using the rule information. The output part outputs a second divided image among a plurality of the divided images to a learning module capable of machine learning or obtained as a learning result, the second divided image cannot be determined whether the inspection target object is good or defective by using the rule information.

Further, an image processing method according to one aspect of the present disclosure acquires an original image showing an inspection target object. Then, a plurality of divided images are generated by dividing the original image based on a feature of the inspection target object shown in the original image. Then, for each of a plurality of the divided images, whether or not determination as to whether the inspection target object is good or defective can be made by using rule information is determined, and, for a first divided image for which determination as to whether the inspection target object is good or defective can be made by using the rule information among a plurality of the divided images, whether the inspection target object is good or defective is determined by using the rule information. Furthermore, a second divided image for which determination as to whether the inspection target object is good or defective cannot be made by using the rule information among a plurality of the divided images is output to a learning module capable of machine learning or obtained as a learning result.

According to the present disclosure, it is possible to provide an image processing device and an image processing method capable of improving learning efficiency or improving processing speed.

### BRIEF DESCRIPTION OF THE DRAWINGS

Fig. 1 is a block diagram illustrating an outline of a system including an image processing device according to an exemplary embodiment.
Fig. 2 is a block diagram illustrating a configuration of the image processing device according to the exemplary embodiment.
Fig. 3 is a diagram for explaining a processing procedure for determining whether an inspection target object is good or defective executed by the image processing device according to the exemplary embodiment.
Fig. 4 is a diagram illustrating a display image according to the exemplary embodiment.
Fig. 5 is a flowchart showing a processing procedure of the image processing device according to the exemplary embodiment.

### DESCRIPTION OF EMBODIMENT

Hereinafter, an exemplary embodiment of the present disclosure will be described with reference to the drawings. Note that the exemplary embodiment described below illustrates one specific example of the present disclosure. Therefore, a numerical value, a shape, a material, a constituent element, an arrangement position and a connection form of constituent elements, and the like shown in the exemplary embodiment hereinafter are examples, and are not intended to limit the present disclosure. Accordingly, among the constituent elements in the exemplary embodiment below, a constituent element not described in an independent claim will be described as an optional constituent element.

Note that, each of the drawings is a schematic diagram and not necessarily illustrated strictly. In each drawing, substantially identical configurations are denoted by identical reference marks, and repetitive explanations of these will be omitted or simplified.

### (Exemplary embodiment)

### [Configuration]

First, a configuration of image processing device 100 according to an exemplary embodiment will be described.

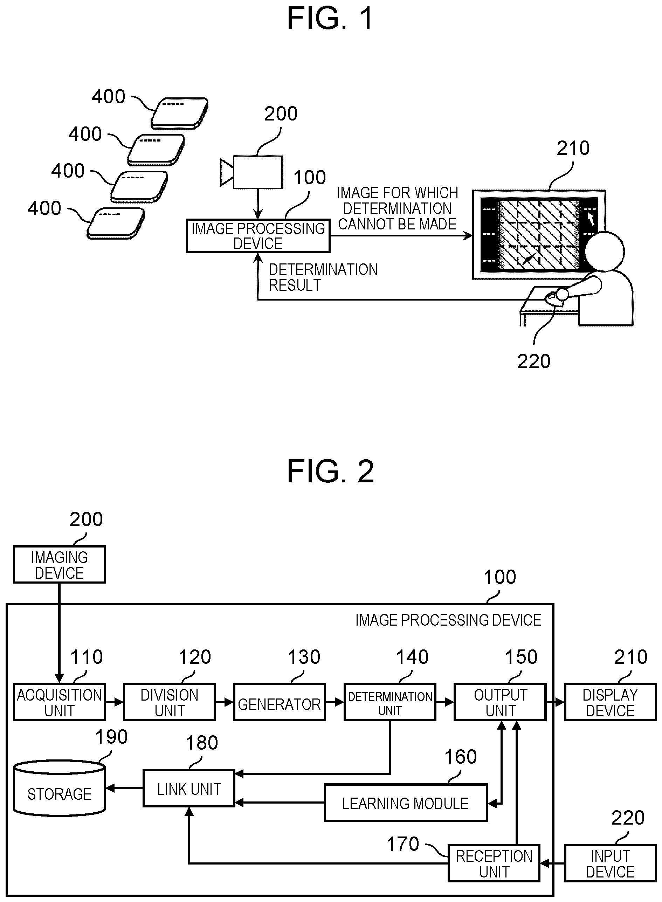

Fig. 1 is a block diagram illustrating an outline of a system including image processing device 100 according to the exemplary embodiment.

Image processing device 100 is a device that determines whether inspection target object (workpiece) 400 is good or defective based on an image (original image) generated by imaging device 200 such as a camera imaging inspection target object (workpiece) 400. For example, image processing device 100 performs predetermined image processing on an original image obtained by imaging inspection target object 400, and performs image analysis or the like on the image to which the predetermined image processing is applied, so as to determine whether inspection target object 400 shown in the image is good or defective.

Determining whether inspection target object 400 is good or defective is, for example, determining the presence or absence of a scratch, a chip, a crack, or the like of inspection target object 400, or determining whether an appropriate character is printed at an appropriate position. Image processing device 100 determines whether an inspection target object shown in an image is good or defective by using rule information or the like in which a predetermined threshold or the like is set.

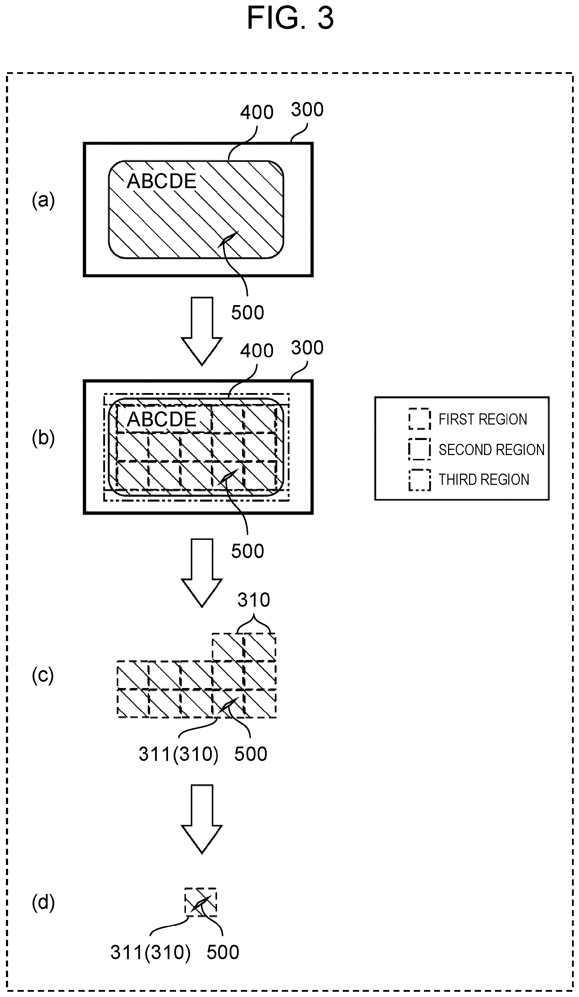

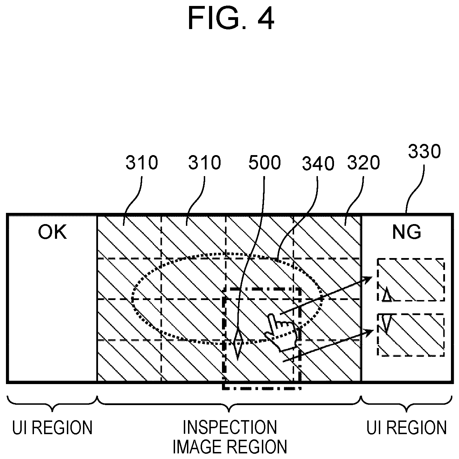

The rule information is information for determining whether inspection target object 400 is good or defective. The rule information is information including, for example, information indicating a range of thresholds of luminance and the like, information indicating a range thresholds of a color and the like, information indicating a character to be printed, and information indicating an outer shape. Image processing device 100 determines whether inspection target object 400 shown in divided image 310 described later with reference to Figs. 3 and 4 is good or defective by using the rule information.

In addition, for example, image processing device 100 causes display device 210 to display an image based on which it is impossible to determine whether inspection target object 400 is good or defective by using the rule information, that is, an image based on which determination as to whether inspection target object 400 is good or defective cannot be made, among images showing inspection target object 400. For example, an inspector checks the image, and inputs a determination result as to whether inspection target object 400 shown in the image is good or defective by using input device 220. For example, image processing device 100 acquires the determination result and performs machine learning so that whether inspection target object 400 shown in the image is good or defective can be determined using artificial intelligence (AI) or the like.

Image processing device 100 is, for example, a computer such as a personal computer or a tablet terminal. Specifically, for example, image processing device 100 is realized by a communication interface for communicating with imaging device 200, display device 210, and input device 220, a nonvolatile memory in which a program is stored, a volatile memory which is a temporary storage area for executing a program, an input and output port for transmitting and receiving a signal, a processor for executing a program, and the like. The communication interface may be realized by a connector or the like to which a communication line is connected so as to enable wired communication, or may be realized by an antenna, a wireless communication circuit, or the like so as to enable wireless communication.

Fig. 2 is a block diagram illustrating a configuration of image processing device 100 according to the exemplary embodiment. Fig. 3 is a diagram for explaining a processing procedure for determining whether inspection target object 400 is good or defective executed by image processing device 100 according to the exemplary embodiment.

As illustrated in Fig. 2, image processing device 100 includes acquisition part 110, division part 120, generator 130, determination part 140, output part 150, learning module 160, reception part 170, link part 180, and storage 190.

Acquisition part 110 is a process part that acquires original image 300 showing inspection target object 400 illustrated in Fig. 3. As illustrated in part (a) of Fig. 3, for example, acquisition part 110 acquires one or more original images 300 from imaging device 200.

Inspection target object 400 is, for example, an electronic component such as an integrated circuit (IC).

Note that inspection target object 400 may be an optional target object such as a substrate instead of an electronic component.

Further, for example, when acquisition part 110 acquires a plurality of original images, inspection target objects shown in the original images may be the same inspection target object, or may be the same kind of inspection target objects and different inspection target objects.

Further, acquisition part 110 may acquire original image 300 from a server device or the like via a communication interface included in image processing device 100.

Division part 120 is a process part that generates a plurality of divided images 310 by dividing original image 300 based on a feature of inspection target object 400 shown in original image 300.

Note that, in a case where acquisition part 110 acquires a plurality of original images, division part 120 may divide the original images such that the number of divided images becomes the same or may divide the original images such that the number of divided images becomes different.

Note that the feature of inspection target object 400 may be optionally set.

For example, division part 120 divides original image 300 showing inspection target object 400 illustrated in part (a) of Fig. 3 based on a feature of inspection target object 400. For example, as illustrated in part (b) of Fig. 3, division part 120 divides original image 300 into (i) a portion (second region indicated by a dashed line in part (b) of Fig. 3) where characters such as "ABCDE" are printed (or marked) in inspection target object 400, (ii) an end portion (third region indicated by a two-dot chain line in (b) of Fig. 3) of inspection target object 400 including a boundary portion between inspection target object 400 and the background in original image 300, and (iii) a surface portion of inspection target object 400 and a region (first region indicated by a broken line in part (a) of Fig. 3) other than the second region and the third region. In this example, division part 120 divides a portion of the first region in original image 300 into 12 sheets, divides a portion of the second region into one sheet, and divides a portion of the third region into four sheets.

For example, in inspection of a surface portion (for example, inspection of a portion that is flat and has a relatively flat surface luminance value in inspection target object 400), the presence or absence of a defect such as a scratch on the surface is inspected.

Further, for example, in inspection of an end portion (for example, inspection of a boundary portion between an inspection target object and the background), the presence or absence of defects such as chipping and distortion of the end portion of inspection target object 400 is inspected.

Further, for example, in inspection of printing (for example, inspection of a portion having a feature in a shape of a character), the presence or absence of defects such as distortion, blurring, and position deviation of a character is inspected.

As described above, content of inspection may be different depending on a position of inspection target object 400, that is, a feature of inspection target object 400 (more specifically, a feature of each position of inspection target object 400). For example, as described above, division part 120 divides original image 300 for each content of inspection, that is, for each feature of inspection target object 400.

Note that the number of divided images 310 generated by division part 120 is not particularly limited. Further, in the example illustrated in Fig. 3, division part 120 divides original image 300 into three regions of the first region, the second region, and the third region, but may divide the original image into two regions or may divide the original image into four or more regions.

Further, in the example illustrated in Fig. 3, features of inspection target object 400 are a printing portion, an end portion, and a surface portion as in (i) to (iii), but are not limited to these examples, and may be optionally set.

Further, a shape (more specifically, an outer shape) of divided image 310 generated by division part 120 may be optional. In the present embodiment, division part 120 divides an original image such that each of a plurality of divided images 310 has a rectangular shape. For example, division part 120 may divide original image 300 such that divided image 310 has an L shape.

Further, as a feature of inspection target object 400, for example, information indicating the feature may be acquired from an inspector via input device 220. Further, for example, division part 120 may identify a feature in original image 300 by using a machine learned identification model (feature identification model) for identifying a feature of inspection target object 400. The feature identification model is, for example, an inference model machine-learned using an original image and training data (what is called annotation information) indicating a feature of an inspection target object included in the original image as learning data. The feature identification model is, for example, a machine learning model using a neural network (for example, a convolutional neural network (CNN)) such as deep learning, but may be another machine learning model.

The feature identification model is stored in advance in storage 190, for example.

Fig. 4 is a diagram illustrating display image 330 according to the exemplary embodiment. Generator 130 is a process part that generates inspection image 320 (see Fig. 4) including one or more divided images 310 selected based on a feature of inspection target object 400 among a plurality of divided images 310 generated by division part 120. Specifically, generator 130 classifies a plurality of divided images 310 based on a feature of inspection target object 400, and generates a plurality of inspection images 320 by combining one or more divided images 310 classified into the same group among a plurality of divided images 310. In the present embodiment, one or more divided images 310 are two or more divided images 310. That is, generator 130 generates inspection image 320 including two or more divided images 310. For example, after performing preprocessing for maintaining a detection rate such as reduction and emphasis on divided image 310 generated by division part 120, generator 130 arranges divided images 310 in a manner spreading divided images 310 without any gap for each of divided images 310 according to a feature of inspection target object 400, so as to generate inspection image 320.

For example, generator 130 classifies a plurality of divided images 310 generated by division part 120 into a plurality of groups in which the divided images are collected for each feature of inspection target object 400. Generator 130 further generates inspection image 320 in which divided images 310 are collected for each of the classified groups.

Each group is, for example, a group of divided images 310 for each of features of inspection target object 400 such as a printing portion, an end portion, and a surface portion as described in (i) to (iii) above.

Note that generator 130 may perform image processing such as size change, luminance change, or color change on divided image 310.

For example, generator 130 may perform image processing on divided image 310 such that a defect (for example, defect 500 illustrated in Fig. 3) included in inspection target object 400 is emphasized. Such image processing is, for example, image processing for increasing a luminance difference, processing for increasing contrast, or processing for increasing the size of a portion estimated to be a defect.

For example, generator 130 generates inspection image 320 to which predetermined processing is applied based on luminance of one or more divided images 310. For example, as predetermined processing, generator 130 calculates an average value of luminance of one or more divided images 310, and generates inspection image 320 in which arrangement is performed after luminance of one or more divided images 310 is corrected based on the calculated average value. Further, for example, in a case where two or more divided images 310 are arranged as predetermined processing, generator 130 corrects a luminance gradient of at least a part of adjacent divided images 310 among the two or more divided images 310. Note that a portion for correcting luminance gradient may be one or both of adjacent divided images. Further, for example, as predetermined processing, generator 130 determines arrangement of two or more divided images 310 such that a luminance difference between adjacent divided images 310 among the two or more divided images 310 is minimized, and generates inspection image 320 in which the two or more divided images 310 are arranged in the determined arrangement.

Further, for example, in a case where two or more divided images 310 are arranged, generator 130 generates inspection image 320 on which blurring processing such as alpha blending is performed between adjacent divided images 310 among the two or more divided images 310. Note that between adjacent divided images 310 is, for example, a portion where images in adjacent divided images 310 of at least one of the adjacent divided images 310 are in contact with each other. Between adjacent divided images 310 may be, for example, an image on which blurring processing is performed arranged between the adjacent divided images 310.

Further, for example, generator 130 may perform image processing of changing (specifically, reducing) size of an image on a divided image. For example, generator 130 may generate inspection image 320 after performing processing of reducing size of one or more divided images 310 and increasing luminance contrast of the one or more divided images 310. Note that generator 130 may perform processing of increasing luminance contrast after reducing size of divided image 310, or may perform processing of increasing luminance contrast and then reducing size of divided image 310.

Further, the same image processing may be performed for each divided image 310, or different image processing may be performed. Further, different image processing may be performed for each group.

For example, after performing predetermined image processing on divided image 310, generator 130 determines arrangement of divided image 310, and generates the inspection image 320 in which the divided images are arranged in the determined arrangement.

Note that generator 130 may generate an inspection image based on a plurality of original images, or may generate an inspection image based on one original image.

Further, generator 130 may determine arrangement of a plurality of divided images 310 regardless of a positional relationship of original image 300, and generate inspection image 320 in which a plurality of divided images 310 are arranged in the determined arrangement.

Further, for example, as illustrated in part (b) of Fig. 3, in a portion not included in any of the first region, the second region, and the third region in original image 300, divided image 310 may be generated as a fourth region, or the portion may be discarded.

Further, arrangement of divided image 310 in inspection image 320 may be optionally determined. For example, generator 130 determines arrangement of one or more divided images 310 based on a feature of inspection target object 400, and generates one or more inspection images in which one or more divided images 310 are arranged in the determined arrangement.

The number of divided images 310 included in inspection image 320 may be one or more. For example, generator 130 generates inspection image 320 for each feature of inspection target object 400. For example, generator 130 generates inspection image 320 including divided image 310 of the printing portion described above, inspection image 320 including divided image 310 of the end portion described above, and inspection image 320 including divided image 310 of the surface portion described above. For example, generator 130 may generate inspection image 320 in which divided image 310 of the printing portion described above, divided image 310 of the end portion described above, and divided image 310 of the surface portion described above are collected at different positions (for example, an upper portion, a central portion, and a lower portion, or a left portion, a central portion, and a right portion of inspection image 320, or the like.).

Determination part 140 is a process part that determines whether or not determination as to whether inspection target object 400 is good or defective can be made using the rule information for each of a plurality of divided images 310. Specifically, determination part 140 determines whether or not determination as to whether inspection target object 400 shown in divided image 310 is good or defective can be made by using the rule information, more specifically, without using machine learning. For example, determination part 140 determines whether inspection target object 400 is good or defective (more specifically, whether a portion shown in divided image 310 in inspection target object 400 is good or defective) by using the rule information for a first divided image for which whether inspection target object 400 is good or defective can be determined by using the rule information among a plurality of divided images 310.

For example, determination part 140 performs image measurement such as luminance measurement on divided image 310, and determines that inspection target object 400 in divided image 310 is defective when a value of the measured luminance or the like is more than or equal to a predetermined first threshold, or less than or equal to a second threshold smaller than the first threshold. Further, for example, when a measured value of luminance or the like is less than the predetermined first threshold and larger than the second threshold, determination part 140 determines that inspection target object 400 in divided image 310 is good.

Note that content of the image measurement may be a luminance gradient of divided image 310, luminance dispersion, luminance deviation, size of a portion including a predetermined number or more of pixels in a predetermined luminance range, or the like. Further, for example, determination part 140 may determine that inspection target object 400 in divided image 310 including a pixel having specific luminance is defective, or may determine that inspection target object 400 in divided image 310 including a predetermined number or more of pixels in a predetermined luminance range is defective. Further, for example, determination part 140 may determine that it is impossible to make determination as to whether inspection target object 400 in the divided image 310 is good or defective for the divided image 310 for which luminance measurement or the like cannot be performed.

These measurement content, threshold, and determination method may be stored in storage 190 as, for example, the rule information.

For example, in a case where generator 130 generates a plurality of inspection images 320 each including a plurality of divided images 310, determination part 140 determines whether or not determination as to whether inspection target object 400 is good or defective can be made by using the rule information for each of a plurality of inspection images 320.

Output part 150 is a process part that outputs divided image 310, a determination result as to whether inspection target object 400 is good or defective, and the like. For example, output part 150 outputs a second divided image for which determination as to whether inspection target object 400 is good or defective cannot be made by using the rule information among a plurality of divided images 310 to learning module 160 capable of machine learning or obtained as a learning result. Further, for example, output part 150 outputs the second divided image to display device 210 to cause display device 210 to display the second divided image. For example, output part 150 outputs inspection image 320 generated by generator 130 and including the second divided image to display device 210, so as to cause display device 210 to display inspection image 320. In the present exemplary embodiment, output part 150 causes display device 210 to display display image 330 by outputting display image 330 (see Fig. 4) including inspection image 320 to display device 210. Output part 150 may output inspection image 320 to storage 190 and store the inspection image in storage 190.

Note that output part 150 may cause display device 210 to display the first divided image by outputting a determination result of inspection target object 400 in the first divided image by determination part 140 to display device 210.

For example, as illustrated in part (c) of Fig. 3, determination part 140 determines, for each of 12 divided images 310, whether or not determination as to whether inspection target object 400 shown in divided image 310 is good or defective can be made. For example, as illustrated in part (d) of Fig. 3, output part 150 causes display device 210 to display divided image 311 (for example, inspection image 320 or display image 330 including the divided image 311) for which determination part 140 cannot make determination as to whether inspection target object 400 shown in divided image 310 is good or defective among 12 divided images 310, or outputs the divided image to learning module 160.

Learning module 160 is a learning module capable of machine learning or obtained as a learning result. Specifically, learning module 160 is a process part that uses an identification model (defect identification model) that uses divided image 310 as input and outputs a determination result as to whether inspection target object 400 shown in input divided image 310 is good or defective.

The defect identification model is, for example, an inference model machine-learned using an image and training data indicating a determination result as to whether inspection target object 400 shown in the image is good or defective as learning data. The defect identification model is, for example, a machine learning model using a neural network such as deep learning, but may be another machine learning model.

For example, learning module 160 is a learning module obtained as a learning result, that is, pre-trained. In this case, for example, output part 150 outputs a determination result as to whether inspection target object 400 in the second divided image is good or defective by learning module 160 to display device 210. By the above, for example, a determination result as to whether inspection target object 400 is good or defective is displayed on display device 210.

Note that output part 150 may output, to display device 210, both a determination result determined as good and a determination result determined as defective as a determination result as to whether inspection target object 400 is good or defective, may output only a determination result determined as good, or may output only a determination result determined as defective. Further, output part 150 may output original image 300, divided image 310, or inspection image 320 for which determination is made together with a determination result. Further, output part 150 may output an identifier such as a manufacturing number uniquely indicating inspection target object 400 together with a determination result. The identifier may be a file name or the like of a file of original image 300, or may be a character or the like printed on a printing portion.

Reception part 170 is a process part that receives operation of an inspector. Reception part 170 receives operation of an inspector via input device 220, for example. For example, reception part 170 receives a determination result as to good or defective for the second divided image. For example, an inspector looks at inspection image 320 displayed on display device 210, and inputs information indicating divided image 310 including defect 500 among a plurality of divided images 310 (for example, the second divided images) included in inspection image 320 by using input device 220. For example, reception part 170 receives the input as a determination result. In this case, for example, output part 150 causes learning module 160 to perform machine learning by outputting the second divided image and a determination result as to whether inspection target object 400 is good or defective in the second divided image received by reception part 170 to learning module 160.

Fig. 4 is a diagram illustrating display image 330 according to the exemplary embodiment.

Display image 330 is an image displayed on display device 210. Display image 330 includes an inspection image region and a user interface (UI) region.

The inspection image region is located at a central portion of display image 330, and is a region where inspection image 320 is arranged.

The UI region is a region located in a peripheral portion of display image 330 and in which an operation image is arranged. For example, a central vision is an elliptical region 340. For this reason, the UI region is preferably arranged at a peripheral edge portion of display image 330, for example, at both left and right end portions of display image 330 in a case of display image 330 that is horizontally long illustrated in Fig. 4. Note that the central vision represents a region in the vicinity of the center of a visual field of a human (here, an operator).

For example, an inspector operates input device 220 to move divided image 310 to a region described as "OK" for divided image 310 showing a good object (for example, divided image 310 that does not include defect 500), and to move divided image 310 to the region described as "NG" for divided image 310 showing a defective object (for example, divided image 310 including defect 500), with respect to a plurality of divided images 310 included in inspection image 320.

Input device 220 outputs a result of movement of divided image 310 to image processing device 100 as a determination result as to whether inspection target object 400 shown in divided image 310 is good or defective. Note that input device 220 may output, to image processing device 100, a determination result indicating that inspection target object 400 in all divided images 310 that are not moved to "NG" is good.

For example, output part 150 causes learning module 160 to perform machine learning by outputting the second divided image and a determination result as to whether inspection target object 400 in the second divided image received by reception part 170 is good or defective to learning module 160.

The defect identification model is stored in advance in storage 190, for example.

Note that learning module 160 may be a learning module that is capable of machine learning, that is, to perform machine learning in future, or may be a learning module obtained as a learning result, that is, a pre-trained learning module. That is, image processing device 100 may be a device that causes learning module 160 to perform machine learning using the second divided image, or may be a device that causes learning module 160 to determine whether inspection target object 400 shown in the second divided image is good or defective. Image processing device 100 may include learning module 160 or may be connected in a communicable manner to a device including learning module 160 without including learning module 160.

Further, Fig. 4 illustrates the configuration in which divided image 310 is moved to one of the UI region of "OK" and the UI region of "NG" so that a determination result as to whether inspection target object 400 in divided image 310 (shown in divided image 310) is good or defective is input. However, the configuration may be such that a determination result as to whether inspection target object 400 in divided image 310 is good or defective is input as buttons such as "OK" and "NG" are clicked.

Further, output part 150 may cause display device 210 to display information indicating a position of divided image 310 in original image 300 that is the source of divided image 310.

Link part 180 stores a plurality of divided images 310 and a determination result as to whether inspection target object 400 in a plurality of divided images 310 is good or defective in storage 190 in association with each other. A determination result as to whether inspection target object 400 is good or defective may be obtained by determination part 140, may be obtained by learning module 160, or may be received by reception part 170.

Further, for example, link part 180 stores a defective image in which inspection target object 400 is determined to be defective by determination part 140 or learning module 160 among a plurality of divided images 310 in storage 190 in association with a determination result indicating that the inspection target object is defective. After the above, for example, output part 150 outputs the defective image to display device 210 to display the defective image on display device 210. Further, for example, reception part 170 receives a determination result as to whether inspection target object 400 in a defective image is good or defective. In these cases, for example, in a case where a determination result as to whether inspection target object 400 in a defective image received by reception part 170 is good or defective is good, link part 180 changes a determination result stored in storage 190 in association with the defective image to a determination result indicating good. That is, for example, image processing device 100 receives, from an inspector, whether or not a determination result as to whether inspection target object 400 is good or defective by determination part 140 or learning module 160 is correct, and in a case where the determination result is incorrect, image processing device 100 corrects and stores the determination result in storage 190.

Note that, for example, in a case where the determination result as to whether inspection target object 400 is good or defective by learning module 160 is incorrect, learning module 160 may perform machine learning using the defective image and the determination result received by reception part 170 (specifically, the correct determination result received from an inspector) as learning data.

Further, learning module 160 may perform machine learning by using an image and a determination result stored in storage 190 as learning data.

Further, in a case where a determination result as to whether inspection target object 400 is good or defective by determination part 140 is incorrect, it is conceivable that the rule information (for example, a threshold such as luminance included in the rule information) is inappropriate. Reception part 170 may receive new rule information, and update the rule information stored in storage 190 to the new rule information, for example.

Note that link part 180 may store all of a plurality of divided images 310 generated by division part 120 in storage 190, or may store only a part of the images in storage 190. For example, among a plurality of divided images 310, link part 180 may store the same number of divided images 310 for which a determination result as to whether inspection target object 400 is good or defective is good and divided images 310 for which the determination result is defective in storage 190. For example, link part 180 stores, in storage 190, all divided images 310 for which a determination result as to whether inspection target object 400 is good or defective is defective, and divided images 310 for which a determination result as to whether inspection target object 400 is good or defective is good as many as divided images 310 for which the determination result is defective in association with a determination result.

Divided image 310 that is stored in storage 190 by link part 180 and for which a determination result as to whether inspection target object 400 is good or defective is good may be optionally selected. For example, link part 180 may be randomly selected from a plurality of divided images 310 including inspection target object 400 determined to be good and stored in storage 190. Further, for example, link part 180 may determine divided image 310 including inspection target object 400 determined to be good to be stored in storage 190 according to divided image 310 for which a determination result as to whether inspection target object 400 is good or defective is defective in original image 300. For example, link part 180 may store, in storage 190, divided image 310 for which a determination result as to whether inspection target object 400 is good or defective is good located in the vicinity of divided image 310 for which a determination result as to whether inspection target object 400 is good or defective is defective in original image 300. Furthermore, for example, link part 180 may store divided image 310 in original image 300 different from divided image 310 in which inspection target object 400 is determined to be defective at the same position as divided image 310 (that is, inspection target object 400 different from inspection target object 400 determined to be defective), divided image 310 showing inspection target object 400 determined to be good. As described above, link part 180 may store, in storage 190, divided image 310 for which a determination result as to whether inspection target object 400 is good or defective is good and which has a feature close to divided image 310 for which a determination result as to whether inspection target object 400 is good or defective is defective. Further, for example, link part 180 may perform luminance measurement on divided image 310 and store divided image 310 having a luminance value at a predetermined value in storage 190.

Further, link part 180 may store each of a plurality of divided images 310 and information indicating a feature of inspection target object 400 in storage 190 in association with each other. That is, link part 180 may store a plurality of divided images 310 in storage 190 for each feature such as a surface portion, an end portion, or a printing portion.

Acquisition part 110, division part 120, generator 130, determination part 140, output part 150, learning module 160, reception part 170, and link part 180 are realized by, for example, one or more processors.

Storage 190 is a storage device that stores a program executed by a process part such as acquisition part 110, division part 120, generator 130, determination part 140, output part 150, learning module 160, reception part 170, and link part 180 to perform each piece of processing, information necessary for the processing, a plurality of divided images 310 or inspection image 320, and the like. Storage 190 is realized by, for example, a hard disk drive (HDD), a semiconductor memory, or the like.

Imaging device 200 is a camera that generates an original image by imaging an inspection target object. imaging device 200 is realized by, for example, a complementary metal oxide semiconductor (CMOS) image sensor or the like.

Display device 210 is a display that displays an image under the control of image processing device 100 (more specifically, output part 150). Display device 210 displays, for example, an inspection image, a display image, a determination result of determination part 140 or learning module 160, or the like. Display device 210 is realized by, for example, a display device such as a liquid crystal panel or an organic electro luminescence (EL) panel.

Input device 220 is a user interface that receives operation of an inspector. Input device 220 is realized by a mouse, a keyboard, a touch panel, a hardware button, or the like.

### [Processing procedure]

Subsequently, a processing procedure of image processing device 100 according to the exemplary embodiment will be described.

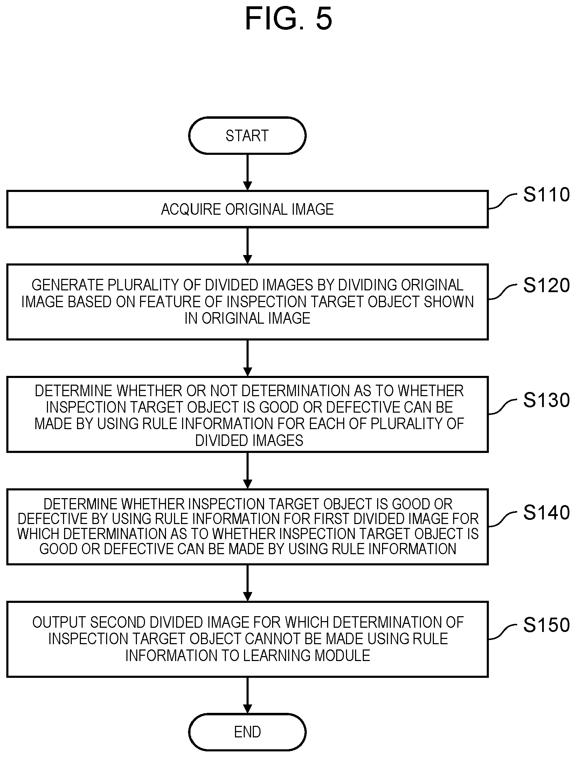

Fig. 5 is a flowchart showing a processing procedure of image processing device 100 according to the exemplary embodiment.

First, acquisition part 110 acquires original image 300 showing inspection target object 400 (S110).

Next, division part 120 generates a plurality of divided images 310 by dividing original image 300 acquired by acquisition part 110 based on a feature of inspection target object 400 shown in original image 300 (S120).

For example, division part 120 performs alignment such that inspection target object 400 included in original image 300 is located at a predetermined position. A method of the alignment may be a general method such as edge extraction or pattern matching, and is not particularly limited. Division part 120 may perform alignment of inspection target object 400 based on luminance at each position (for example, for each pixel) of original image 300. Next, division part 120 designates a region for each feature of inspection target object 400, such as the surface portion, the end portion, and the printing portion described above. The designation of the area may be designation by an inspector, or may be automatic designation by division part 120 by the machine learning or the like described above. Division part 120 generates a plurality of divided images 310 by dividing original image 300 for each designated region.

Note that division part 120 may divide a designated region so as not to have a gap, or may divide original image 300 so that divided images 310 partially overlap each other, that is, the same image portion is included in some of divided images 310.

Further, size of divided image 310 may be optionally determined, and is not particularly limited. Size of divided image 310 may be determined in advance by a specific numerical value, or may be determined according to size of inspection target object 400 such as 1/10 of inspection target object 400.

Further, a feature of inspection target object 400 may be identified by a combination of colors. Further, classification of features does not need to cover all patterns included in original image 300. For example, even if inspection target object 400 includes five colors, the configuration may be such that three colors are set as features of inspection target object 400. That is, features of inspection target object 400 do not need to be set to include all features of inspection target object 400.

Further, division part 120 may store original image 300 that is a source of divided image 310 and information indicating a position of divided image 310 in original image 300 in storage 190.

Further, division part 120 does not need to perform alignment of inspection target object 400 in original image 300. For example, original image 300 may be divided such that divided image 310 has a predetermined size. The predetermined size may be optionally determined, and is not particularly limited. Information indicating the predetermined size may be stored in storage 190, for example.

Further, for example, in a case of dividing original image 300 such that divided image 310 has a predetermined size without performing alignment of inspection target object 400 in original image 300, division part 120 may determine how to classify divided image 310 for each feature based on a color when a feature of inspection target object 400 is a color. For example, when a surface of inspection target object 400 is black, a character portion is white, and a background is gray, division part 120 may determine, for example, divided image 310 including only black as a surface portion, determine divided image 310 including only black and white as an end portion, determine divided image 310 including only white as a printing portion, and determine divided image 310 including only gray as another portion.

Next, determination part 140 determines, for each of a plurality of divided images 310, whether or not determination as to whether inspection target object 400 is good or defective can be made by using the rule information (S130).

Next, determination part 140 determines whether inspection target object 400 is good or defective using the rule information for the first divided image for which determination as to whether inspection target object 400 is good or defective can be made using the rule information among a plurality of divided images 310 (S140).

Next, output part 150 outputs a second divided image for which determination as to whether inspection target object 400 is good or defective using the rule information cannot be made among a plurality of divided images 310 to learning module 160 capable of machine learning or obtained as a learning result (S150).

By the above, output part 150 causes learning module 160 to perform machine learning using the second divided image, or causes learning module 160 to determine whether inspection target object 400 shown in the second divided image is good or defective.

### [Summary]

As described above, image processing device 100 according to the exemplary embodiment includes acquisition part 110 that acquires original image 300 showing inspection target object 400, division part 120 that generates a plurality of divided images 310 by dividing original image 300 based on a feature of inspection target object 400 shown in original image 300, determination part 140 that determines whether or not determination as to whether inspection target object 400 is good or defective can be made using the rule information for each of a plurality of divided images 310, and determines whether inspection target object 400 is good or defective using the rule information for the first divided image for which determination as to whether inspection target object 400 is good or defective can be made using the rule information among a plurality of divided images 310, and output part 150 that outputs the second divided image for which determination as to whether inspection target object 400 is good or defective cannot be made using the rule information among a plurality of divided images 310 to learning module 160 capable of machine learning or obtained as a learning result.

According to this, for an image for which determination as to whether inspection target object is good or defective can be made easily by using the rule information, image processing device 100 can perform the determination by using the rule information, and for an image for which the determination cannot be made by using the rule information, image processing device 100 can cause learning module 160 to perform learning or cause learning module 160 to perform the determination if the learning module 160 is pre-trained. For this reason, learning module 160 can be caused to learn only an image for which the determination cannot be made by using the rule information, or to perform the determination only for an image for which the determination cannot be made by using the rule information. For this reason, according to image processing device 100, it is not necessary to cause learning module 160 to perform processing on an image that can be determined using the rule information, and for this reason, learning efficiency of learning module 160 can be improved or processing speed of learning module 160 can be increased (that is, speed for obtaining a result of the determination is increased).

Further, for example, output part 150 outputs the second divided image to display device 210 to cause display device 210 to display the second divided image.

According to this, it is possible to notify an inspector of an image for which determination as to whether inspection target object is good or defective cannot be made by using the rule information.

Further, for example, image processing device 100 further includes reception part 170 that receives a determination result as to whether the second divided image is good or defective, and output part 150 outputs the second divided image and a determination result as to whether inspection target object 400 in the second divided image received by reception part 170 is good or defective to learning module 160 so as to cause learning module 160 to perform machine learning.

According to this, it is possible to cause learning module 160 to learn an image for which determination as to whether inspection target object is good or defective cannot be made by using the rule information.

Further, for example, image processing device 100 further includes link part 180 that stores a plurality of divided images 310 and a determination result as to whether inspection target object 400 in a plurality of divided images 310 is good or defective in storage 190 in association with each other.

According to this, for example, an inspector can check whether or not determination using the rule information and determination by learning module 160 are appropriately performed by checking a divided image and a determination result.

Further, for example, among a plurality of divided images 310, link part 180 stores the same number of divided images 310 for which a determination result as to whether inspection target object 400 is good or defective is good and divided images 310 for which the determination result is defective in storage 190.

According to this, in machine learning, the number of images determined to be good and the number of images determined to be defective are preferably equal. According to this, for example, by causing learning module 160 to learn and store these images, an inspector or the like can check a learned image while causing learning module 160 to perform learning effectively.

Further, for example, image processing device 100 includes learning module 160 obtained as a learning result. In this case, for example, output part 150 outputs a determination result as to whether inspection target object 400 in the second divided image is good or defective by learning module 160 to display device 210.

According to this, for example, an inspector can check a determination result as to whether an inspection target object is good or defective and discard an inspection target object determined to be defective.

Furthermore, for example, image processing device 100 further includes link part 180 that stores a defective image in which inspection target object 400 is determined to be defective by determination part 140 or learning module 160 among a plurality of divided images 310 in storage 190 in association with a determination result indicating the inspection target object is defective, and reception part 170 that receives a determination result as to whether inspection target object 400 in a defective image is good or defective. Further, for example, output part 150 outputs a defective image to display device 210. In these cases, for example, in a case where a determination result as to whether inspection target object 400 in a defective image received by reception part 170 is good or defective is good, link part 180 changes a determination result stored in storage 190 in association with the defective image to a determination result indicating good.

According to this, for example, in a case where determination as to whether an inspection target object is good or defective by image processing device 100 is incorrect, learning module 160 performs machine learning based on a determination result received by reception part 170 or the rule information is changed, so that accuracy of determination as to whether inspection target object is good or defective by image processing device 100 is improved.

Further, for example, image processing device 100 further includes generator 130 that classifies a plurality of divided images 310 based on a feature of inspection target object 400, and generates a plurality of inspection images 320 obtained by combining one or more divided images 310 classified into the same group among a plurality of divided images 310. In this case, for example, determination part 140 determines whether or not determination as to whether inspection target object 400 is good or defective can be made by using the rule information for each of a plurality of inspection images 320.

According to this, for example, an inspection image in which divided images are aggregated for each feature is output to learning module 160, so that simplification of a neural network in learning module 160 is realized. For example, as compared with a case where learning module 160 is caused to perform learning by using images that are not aggregated for each feature, it is possible to cause learning module 160 to derive a determination result efficiently (for example, in a manner that processing speed becomes higher).

Further, for example, output part 150 outputs a determination result of inspection target object 400 in the first divided image by determination part 140 to display device 210.

According to this, it is possible to notify an inspector of an image for which determination as to whether inspection target object is good or defective can be made by using the rule information.

Further, an image processing method according to the exemplary embodiment acquires original image 300 showing inspection target object 400 (S110), generates a plurality of divided images 310 by dividing original image 300 based on a feature of inspection target object 400 shown in original image 300 (S120), determines, for each of a plurality of divided images 310, whether or not determination as to whether inspection target object 400 is good or defective can be made by using rule information (S130), and determines, for a first divided image for which determination as to whether inspection target object 400 is good or defective can be made by using the rule information among a plurality of divided images 310, whether the inspection target object 400 is good or defective by using the rule information (S140), and outputs a second divided image for which determination as to whether inspection target object 400 is good or defective can be made by using the rule information among a plurality of divided images 310 to learning module 160 capable of machine learning or obtained as a learning result (S150).

According to this, an effect similar to that of image processing device 100 is obtained.

Note that these comprehensive or specific aspects may be achieved by a system, a method, an integrated circuit, a computer program, or a non-transitory recording medium such as a computer-readable CD-ROM, or may be achieved by any combination of the system, the method, the integrated circuit, the computer program, and the recording medium.

### (Other exemplary embodiments, and the like)

Although the exemplary embodiment is described above, the present disclosure is not limited to the exemplary embodiment.

Therefore, the constituent elements illustrated in the accompanying drawings or described in the detailed description may include not only a constituent element essential for solving the problem but also a constituent element non-essential for solving the problem, for the purpose of illustrating the above technique. Therefore, it should not be immediately recognized that these non-essential constituent elements are essential based on the fact that these non-essential constituent elements are described in the accompanying drawings and the detailed description.

For example, image processing device 100 does not need to include generator 130 or link part 180.

Further, for example, image processing device 100 may further include a learning part (process part) for learning an identification model. In this case, the above-described training data may be stored in storage 190.

Further, for example, image processing device 100 may perform image processing such as the above-described luminance correction before dividing original image 300.

Further, for example, image processing device 100 may have a function of determining whether or not an inspector can appropriately extract a defect. For example, image processing device 100 may determine whether a position of a defect indicated by position information received by reception part 170 is correct or incorrect. Specifically, image processing device 100 may determine whether a position of a defect indicated by position information received by reception part 170 matches a position of a defect of inspection image 320 displayed on display device 210. For example, image processing device 100 may display a determination result on display device 210 by causing output part 150 to output a determination result of correct or incorrect.

Note that information indicating a position of a defect in an inspection image displayed on display device 210 may be stored in advance in storage 190, or may be generated by image processing device 100 applying image processing to inspection image 320.

Further, for example, image processing device 100 may display divided image 310 for which determination as to whether inspection target object 400 in divided image 310 is good or defective cannot be made in both determination part 140 and learning module 160 among a plurality of divided images 310 by outputting the divided image to display device 210. For example, learning module 160 may be configured to output information indicating that determination of good or defective cannot be made in a case where accuracy of a determination result of good or defective is lower than a predetermined value.

Further, in the above-described exemplary embodiment, image processing device 100 is realized as a single device, but may be realized by a plurality of devices. In a case where the image processing device is realized by a plurality of devices, constituent elements included in the image processing device described in the above exemplary embodiment may be distributed to a plurality of devices in any manner. For example, the image processing device may be realized as a client server system. In this case, a client device is a mobile terminal that acquires an image, receives operation of a user, displays an image, and the like, and a server device is an information terminal that performs information processing of generating a divided image based on an original image, and the like.

Furthermore, for example, image processing device 100, display device 210, and input device 220 may be arranged at the same place, or may be arranged at different places. For example, imaging device 200 and image processing device 100 may be arranged in a factory, and display device 210 and input device 220 may be arranged in an office outside the factory, a home of an inspector, or the like. Alternatively, for example, imaging device 200 may be arranged in a factory, image processing device 100 may be arranged as a server in an office or the like outside the factory, and display device 210 and input device 220 may be arranged in a home or the like of an inspector. Further, a plurality of display devices 210 may be provided, and the first divided image and the second divided image may be displayed on separate display devices.

Further, in the above exemplary embodiment, processing executed by a specific process part may be executed by another process part. Further, the order of a plurality of pieces of processing may be changed, or a plurality of pieces of processing may be executed in parallel.

Further, in the above exemplary embodiment, each constituent element (each process part) may be realized by executing a software program suitable for each constituent element. A program execution part such as a central processing part (CPU) and a processor reads and executes a software program recorded in a recording medium such as a hard disk and a semiconductor memory, so that each constituent element may be realized.

Further, each constituent element may be realized by hardware. Each constituent element may be a circuit (or an integrated circuit). A plurality of circuits may constitute one circuit as a whole or may be separate circuits. Further, each of these circuits may be a general-purpose circuit or a dedicated circuit.

Further, a general or specific mode of the present disclosure may be realized by a system, a device, a method, an integrated circuit, a computer program, or a computer-readable, non-transitory recording medium such as a CD-ROM. Further, a general or specific mode of the present disclosure may be realized by any combination of a system, a device, a method, an integrated circuit, a computer program, and a recording medium.

For example, the present disclosure may be realized as an image identification method executed by a computer such as an image processing device. Further, the present disclosure may be realized as a program causing a computer to execute an image identification method, or may be realized as a computer-readable non-transitory recording medium in which such a program is recorded.

In addition, the present disclosure also includes a mode obtained by applying various modifications conceived by those skilled in the art to each exemplary embodiment, or a mode achieved by optionally combining constituent elements and functions in each exemplary embodiment within a range not departing from the gist of the present disclosure.

### INDUSTRIAL APPLICABILITY

The present disclosure is useful as an image processing device capable of generating an inspection image for visual inspection by an inspector from an image generated by a camera or the like.

### REFERENCE MARKS IN THE DRAWINGS

- 100: image processing device
- 110: acquisition part
- 120: division part
- 130: generator
- 140: determination part
- 150: output part
- 160: learning module
- 170: reception part
- 180: link part
- 190: storage
- 200: imaging device
- 210: display device
- 220: input device
- 300: original image
- 310, 311: divided image
- 320: inspection image
- 330: display image
- 340: region
- 400: inspection target object
- 500: defect

## Claims

1. An image processing device comprising:
an acquisition part that acquires an original image showing an inspection target object;
a division part that generates a plurality of divided images by dividing the original image based on a feature of the inspection target object shown in the original image;
a determination part that determines, for each of the plurality of divided images, whether or not determination as to whether the inspection target object is good or defective can be made by using rule information, and determines, for a first divided image for which determination as to whether the inspection target object is good or defective can be made by using the rule information among the plurality of divided images, whether the inspection target object is good or defective by using the rule information; and
an output part outputs a second divided image among the plurality of divided images to a learning module capable of machine learning or obtained as a learning result, the second divided image cannot be determined whether the inspection target object is good or defective by using the rule information.

2. The image processing device according to Claim 1, wherein the output part outputs the second divided image to a display device to cause the display device to display the second divided image.

3. The image processing device according to Claim 2, further comprising a reception part that receives a determination result as to whether the second divided image is good or defective, wherein the output part outputs the second divided image and a determination result as to whether the inspection target object in the second divided image received by the reception part is good or defective to the learning module so as to cause the learning module to perform machine learning.

4. The image processing device according to Claim 1, further comprising a link part that stores the plurality of divided images and a determination result as to whether the inspection target object in the plurality of divided images is good or defective in a storage in association with each other.

5. The image processing device according to Claim 4, wherein the link part stores, in the storage, the same number of divided images for which a determination result as to whether the inspection target object is good or defective is good and divided images for which a determination result as to whether the inspection target object is good or defective is defective among the plurality of divided images.

6. The image processing device according to Claim 1, further comprising the learning module obtained as a learning result, wherein the output part outputs a determination result as to whether the inspection target object in the second divided image is good or defective by the learning module to a display device.

7. The image processing device according to Claim 6, further comprising:
a link part that stores a defective image for which the inspection target object is determined to be defective by the determination part or the learning module among the plurality of divided images in a storage in association with a determination result indicating that the inspection target object is defective; and
a reception part that receives a determination result as to whether the inspection target object in the defective image is good or defective,
wherein the output part outputs the defective image to the display device, and
in a case where a determination result as to whether the inspection target object in the defective image is good or defective received by the reception part is good, the link part changes a determination result stored in the storage in association with the defective image to a determination result indicating good.

8. The image processing device according to Claim 1, further comprising a generator that classifies the plurality of divided images based on a feature of the inspection target object, and generates a plurality of inspection images by combining one or more divided images classified into a same group among the plurality of divided images,
wherein the determination part determines, for each of the plurality of inspection images, whether or not determination as to whether the inspection target object is good or defective can be made by using the rule information.

9. The image processing device according to any one of Claims 1 to 5 or 8, wherein the output part outputs a determination result of the inspection target object in the first divided image by the determination part to a display device.

10. The image processing device according to Claim 6 or 7, wherein the output part outputs a determination result of the inspection target object in the first divided image by the determination part to the display device.

11. An image processing method comprising:
acquiring an original image showing an inspection target object;
generating a plurality of divided images by dividing the original image based on a feature of the inspection target object shown in the original image;
determining, for each of the plurality of divided images, whether or not determination as to whether the inspection target object is good or defective can be made by using rule information, and determines, for a first divided image for which determination as to whether the inspection target object is good or defective can be made by using the rule information among the plurality of divided images, whether the inspection target object is good or defective by using the rule information; and
outputting a second divided image for which determination as to whether the inspection target object is good or defective can not be made by using the rule information among the plurality of divided images to a learning module capable of machine learning or obtained as a learning result.
